(19) Europäisches Patentamt
European Patent Office
Office européen des brevets

(11) **EP 1 693 581 B1**

(12) **EUROPEAN PATENT SPECIFICATION**

(45) Date of publication and mention
of the grant of the patent:
**25.08.2010 Bulletin 2010/34**

(51) Int Cl.:
*F16C 19/18* (2006.01)   *F16C 33/78* (2006.01)
*F16C 33/66* (2006.01)   *F16C 33/32* (2006.01)
*F16C 33/58* (2006.01)   *F16H 57/02* (2006.01)

(21) Application number: **03780726.0**

(22) Date of filing: **11.12.2003**

(86) International application number:
**PCT/JP2003/015854**

(87) International publication number:
**WO 2005/057030 (23.06.2005 Gazette 2005/25)**

(54) **BEARING DEVICE FOR SUPPORTING PINION SHAFT**

LAGERVORRICHTUNG ZUM STÜTZEN EINER RITZELWELLE

DISPOSITIF DE PALIER POUR ARBRE DE PIGNON

(84) Designated Contracting States:
**DE FR GB**

(43) Date of publication of application:
**23.08.2006 Bulletin 2006/34**

(73) Proprietor: **JTEKT Corporation
Osaka-shi
Osaka 542-8502 (JP)**

(72) Inventors:
• **KAWAMURA, Motoshi,
Koyo Seiko Co., Ltd.
Osaka-shi,
Osaka 542-0081 (JP)**
• **AKIYAMA, Muneyasu,
Koyo Seiko Co., Ltd.
Osaka-shi,
Osaka 542-0081 (JP)**
• **TACHI, Hiroshi,
Koyo Seiko Co., Ltd.
Osaka-shi,
Osaka 542-0081 (JP)**

(74) Representative: **Steinmeister, Helmut et al
Patentanwälte
TER MEER STEINMEISTER & PARTNER GbR
Artur-Ladebeck-Strasse 51
33617 Bielefeld (DE)**

(56) References cited:
DE-A1- 2 833 362    JP-A- 10 009 258
JP-A- 10 009 259    JP-A- 11 153 005
JP-A- 2000 002 239   JP-A- 2000 046 060
JP-A- 2003 120 696   JP-A- 2003 172 341
JP-A- 2003 232 346   JP-A- 2003 254 326
JP-A- 2003 278 765   JP-U- 5 086 026
US-A- 5 501 530

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

1. Field of the invention

The present invention relates to a bearing apparatus for supporting a pinion shaft for rotatably supporting a pinion shaft which configures a differential mechanism of a vehicle, a transfer mechanism for a four-wheel drive vehicle, or the like.
The JP 2003 232346 A (D1) discloses a combination of double row and single row bearings, but it does not suggest defining appropriate curvatures and contact angle so as to further reduce torque.
The US-A-5 501 530 (D2) relates to a bearing for a wheel, which is different from a bearing for a pinion shaft. It does not suggest defining appropriate curvatures and contact angle in a structure with a combination of double row and single row bearings.

2. Description of the prior art

In a differential mechanism of a vehicle, or a transfer mechanism for a four-wheel drive vehicle, there has been conventionally proposed a configuration where a pinion shaft has been rotatably supported by a tapered roller bearing at a pinion gear side and a companion flange side, respectively (For example, refer to Japanese Patent Application Publication No. 9-105450 and 10-220468.) . In the case of such differential mechanism and transfer mechanism, a tapered roller bearing with large load carrying capacity is used for a rolling bearing on a pinion gear side or a companion flange side.
When the tapered roller bearing with large load carrying capacity is used, frictional resistance will increase, so that running torque increases, thereby there may exist a possibility of influencing fuel consumption of the vehicle.

Summary of the Invention

The present invention is **characterized in that** a bearing apparatus for supporting a pinion shaft comprising a pair of rolling bearings which rotatably support the pinion shaft to a case and are arranged side by side in a shaft direction between a pinion gear arranged at one end of a pinion shaft and a companion flange attached outside the other end thereof, wherein the rolling bearing on the companion flange side comprises a tandem type angular contact ball bearing with a double raceway comprising an inner ring fixed to the pinion shaft, an outer ring fixed to the case, and a set of balls interposed in two rows between these inner and outer rings,
**[0005]** and wherein a relationship between a radius of curvature Ri of each inner ring raceway, a radius of curvature Ro of each outer ring raceway, and a ball diameter Bd of said rolling bearing on the companion flange side satisfies

$$Ri < Ro,$$

and

$$0.502 \times Bd \leqq Ri \leqq 0.512 \times Bd,$$

and

$$0.510 \times Bd \leqq Ro \leqq 0.520 \times Bd.$$

In addition, a contact angle θ between each ball and the inner and outer ring raceways in the rolling bearing on the companion flange side satisfies 30° ≦ θ ≦ 45°.
The ball bearing for configuring the rolling bearing on the pinion gear side includes a tapered roller bearing.
A differential mechanism, a transfer mechanism, and the like are included as a part to which the bearing apparatus of the present invention is applied, and for example, when applied to the differential mechanism, the companion flange is used for a companion flange connected to a propeller shaft, and when applied to the transfer mechanism, the companion flange is used for an output flange connected to a rear wheel differential gear.
Lubrication for the bearing apparatus may be either of oil lubrication where oil is flipped with a rotation of a ring gear in a differential retaining shield to be supplied to the bearing apparatus, or grease lubrication where the bearing apparatus is filled with grease.

According to the bearing apparatus for supporting the pinion shaft of the present invention, since a load of the rolling bearing on the companion flange side is smaller compared with a load of the rolling bearing on a pinion gear side, a tandem type angular contact ball bearing with small load carrying capacity is used for the rolling bearing on the companion flange side. Frictional resistance of the angular contact ball bearing is smaller compared with that of a tapered roller bearing, thereby making it possible to reduce running torque.

In addition, a relationship between the radius of curvature Ri of each inner ring raceway, the radius of curvature Ro of each outer ring raceway, and the ball diameter of the rolling bearing on the companion flange side Bd satisfies

$$Ri < Ro,$$

and

$$0.502 \times Bd \leqq Ri \leqq 0.512 \times Bd,$$

and

$$0.510 \times Bd \leqq Ro \leqq 0.520 \times Bd.$$

Generally, since a radius of curvature Ri' of an inner ring raceway and a radius of curvature Ro' of an outer ring raceway are given by

$$0.515 \times Bd \leqq Ri' \leqq 0.525 \times Bd$$

$$0.525 \times Bd \leqq Ro' \leqq 0.535 \times Bd,$$

both of the radius of curvature Ri of the inner ring raceway and the radius of curvature Ro of the outer ring raceway of the present invention become smaller compared with typical values. A contact area between the ball and the inner and outer ring raceways is therefore increased (holding surface is increased), so that contact pressure is reduced, thereby making it difficult for indentation to be attached on the raceway surface.

Moreover, the contact angle $\theta$ between each ball and the inner and outer ring raceways in the rolling bearing on the companion flange side satisfies $30° \leqq \theta \leqq 45°$. Generally, in an angular contact ball bearing for high speed revolution, since a contact angle $\theta'$ between a ball and inner and outer ring raceways is $20° \leqq \theta' \leqq 25°$, the contact angle $\theta$ of the present invention becomes larger compared with a typical value, thereby increasing a load carrying capacity to an axial load. Furthermore, since the contact angle $\theta$ is increased, a shoulder diameter of the inner ring is also increased, so that a contact surface with the companion flange can sufficiently be secured, thereby making it possible to certainly fix the inner ring by means of the companion flange.

BRIEF DESCRIPTION OF THE DRAWINGS

Fig. 1 is a cross-sectional view of a differential mechanism to which a bearing apparatus for supporting a pinion shaft is applied;
Fig. 2 is a partially expanded cross-sectional view of the bearing apparatus for supporting the pinion shaft shown in Fig. 1;
Fig. 3 is an expanded sectional view of a rolling bearing on the companion flange side of the bearing apparatus for supporting the pinion shaft shown in Fig. 1;
Fig. 4 is a partially expanded cross-sectional view of a modification of the bearing apparatus for supporting the pinion shaft;

Fig. 5 is a cross-sectional view of a differential mechanism to which a bearing apparatus for supporting a pinion shaft is applied;

Fig. 6 is a partially expanded cross-sectional view of the bearing apparatus for supporting the pinion shaft shown in Fig. 5;

Fig. 7 is an expanded sectional view of a seal portion of the bearing apparatus for supporting the pinion shaft shown in Fig. 5;

Fig. 8 is a partially expanded cross-sectional view of a modification of the bearing apparatus for supporting the pinion shaft ;

Fig. 9 is a partially expanded cross-sectional view of another modification of the bearing apparatus for supporting the pinion shaft;

Fig. 10 is a cross-sectional view of a differential mechanism to which a bearing apparatus for supporting a pinion shaft in an embodiment of the present invention is applied;

Fig. 11 is a partially expanded cross-sectional view of the bearing apparatus for supporting the pinion shaft shown in Fig. 10; and

Fig. 12 is a partially expanded cross-sectional view of a modification of the bearing apparatus for supporting the pinion shaft.

## DETAILED DESCRIPTION OF THE PREFERRED EMBODIMENTS

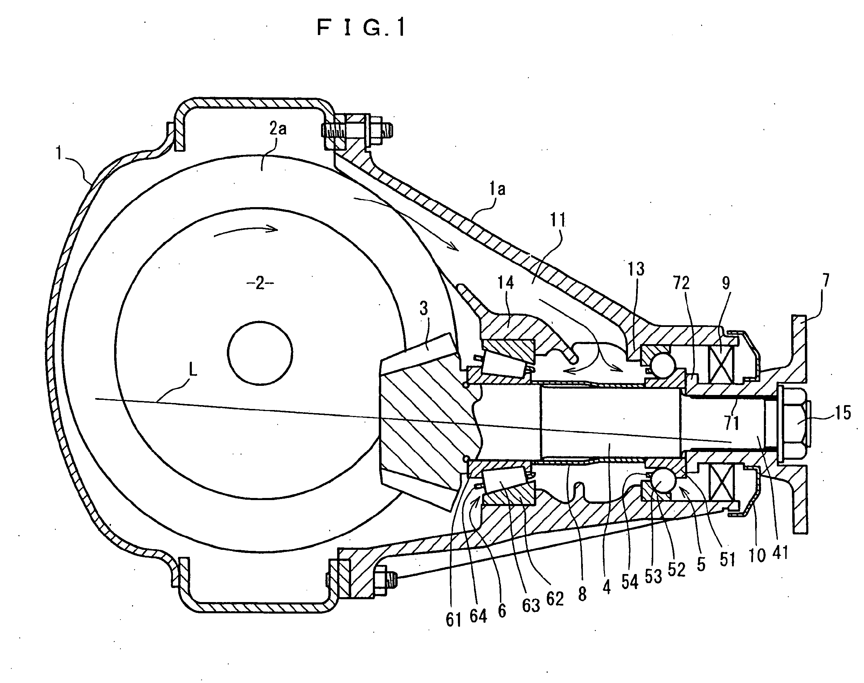

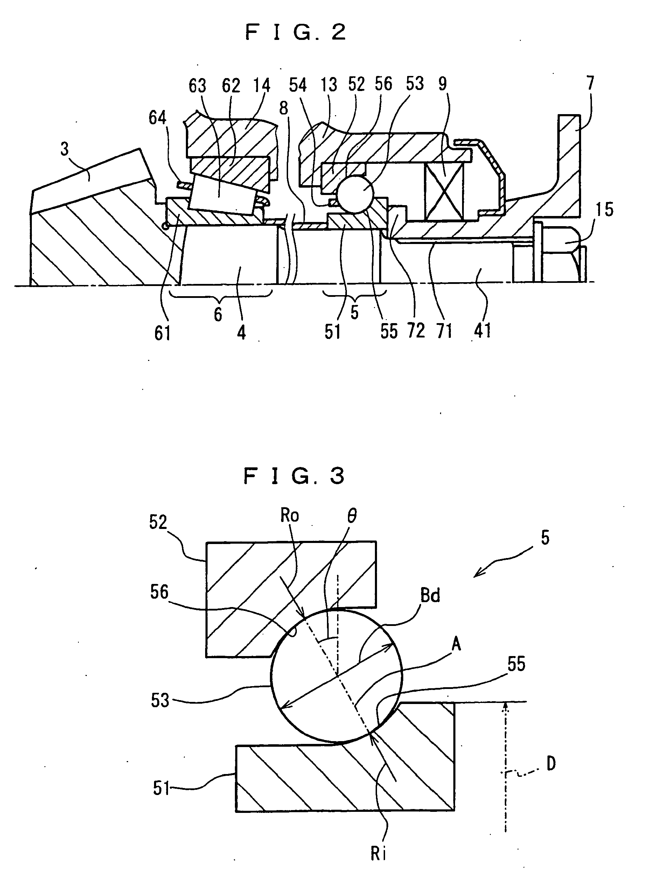

Hereafter, referring to drawings, description will be made of a bearing apparatus for supporting a pinion shaft. Fig. 1 shows a cross-sectional view of a differential mechanism to which the bearing apparatus for supporting the pinion shaft is applied, and Fig. 2 shows a partially expanded cross-sectional view of the bearing apparatus for supporting the pinion shaft shown in Fig. 1.

Referring to Fig. 1 and Fig. 2, reference numeral 1 is a differential retaining shield, and a differential transmission mechanism 2 for differentially interlocking right and left wheels, a pinion gear 3, a pinion shaft 4, and rolling bearings 5 and 6 for rotatably supporting the pinion shaft 4 are housed within this differential retaining shield 1.

The pinion gear 3 is engaged to a ring gear 2a of the differential transmission mechanism 2, and is integrated with a toe of the pinion shaft 4. The pinion shaft 4 is rotatably supported inside the differential retaining shield 1 by a pair of rolling bearings 5 and 6 which are arranged so that those back faces may be faced to each other, and a companion flange 7 to which a propeller shaft (not shown) is to be connected is arranged at a heel.

The rolling bearings 5 and 6 are fitted onto inner peripheral surfaces of annular walls 13 and 14 for fitting a bearing formed at a forged bearing case section 1a of the differential retaining shield 1, respectively. The rolling bearing 5 on the companion flange 7 side is incorporated from an opening section on a minor diameter side of the bearing case section 1a, the rolling bearing 6 on the pinion gear 3 side is incorporated from an opening section on a major diameter side of the bearing case section 1a, and a spacer 8 for positioning is interposed between both the rolling bearings 5 ands 6. A nut 15 is screwed onto the heel of the pinion shaft 4 to be secured to the companion flange 7, so that the rolling bearings 5 and 6 are fixed between the pinion gear 3 and the companion flange 7 in a state where a sufficient preload is given.

Oil for lubrication is stored at a level L in a shutdown state in the differential retaining shield 1. The oil is flipped with a rotation of the ring gear 2a in operation, is then led to the rolling bearings 5 and 6 through an oil introduction path 11 formed between the annular walls 13 and 14 in the bearing case section 1a, and is further returned through an oil return path (not shown). Incidentally, an oil seal 9 for oil leakage prevention is fitted between an outer peripheral surface on a heel side of the pinion shaft 4 and an inner peripheral surface of the bearing case section 1a, and a seal protection cup 10 for concealing the oil seal 9 is attached.

The rolling bearing 5 comprises an inner ring 51, an outer ring 52, and a set of balls 53 held with a cage 54. The rolling bearing 6 comprises an inner ring 61, an outer ring 62, and a set of tapered rollers 63 held with a cage 64.

A spline 71 is formed on an inner peripheral surface of a body which is attached outside the pinion shaft 4 on the companion flange 7 side, and a pressing section 72 of an annular projection which presses an end face of the inner ring 51 of the rolling bearing 5 in a direction of the pinion gear 3 is integrated on an outer peripheral surface of a top portion of the body.

The outer ring 52 of the rolling bearing 5 is press-fitted into one annular wall 13 and the outer ring 62 of the rolling bearing 6 is press-fitted into the other annular wall 14, and in a state where the inner ring 61 which sets the set of tapered rollers 63 and the cage 64 of the rolling bearing 6 is attached outside the pinion shaft 4, the pinion shaft 4 is inserted from the opening section on a major diameter side of the bearing case section 1a. Moreover, the spacer 8 and the inner ring 51 which sets the set of balls 53 and the cage 54 are fitted to a periphery of the pinion shaft 4 from the opening section on the minor diameter side of the bearing case section 1a. The companion flange 7 is then spline-fitted to a minor diameter section 41 on a drive shaft side of the pinion shaft 4. Further, the nut 15 is screwed onto a side edge section of the drive shaft of the pinion shaft 4 to be secured to the companion flange 7.

The pressing section 72 of the companion flange 7 is thus contacted to the end face of the inner ring 51 of the rolling bearing 5, and presses the inner ring 51 in the direction of the pinion gear 3. As a result of it, the rolling bearings 5 and 6 arranged side by side in the shaft direction via the spacer 8 are inserted between the pinion gear 3 and the companion flange 7 to be fixed to the pinion shaft 4 in a state where a preload is given.

Referring to Fig. 3, the rolling bearing 5 on the companion flange 7 side is comprised of an angular contact ball bearing with single raceway.

Supposing that a radius of curvature of a raceway 55 of the inner ring 51 is Ri, a radius of curvature of a raceway 56 of the outer ring 52 is Ro, and a diameter of a ball 53 is Bd, the relationship between the following equations (1), (2), and (3) is given.

$$\mathtt{Ri < Ro} \ldots \mathtt{(1)}$$

$$\mathtt{0.502 \times Bd \leqq Ri \leqq 0.512 \times Bd} \ldots \mathtt{(2)}$$

$$\mathtt{0.510 \times Bd \leqq Ro \leqq 0.520 \times Bd} \ldots \mathtt{(3)}$$

Generally, the radius of curvature Ro is set larger than the radius of curvature Ri by approximately 1 %. For example, it is set as Ro=0.515×Bd with respect to Ri=0.505×Bd.

A contact angle $\theta$ between the ball 53 and the inner and outer rings 51 and 52 is an angle $\theta$ between a line of action A connecting two points where the ball 53 is contacted with the inner and outer raceways 55 and 56, and a radial plane, and this angle $\theta$ has a relationship of following equation (4).

$$\mathtt{30° \leqq \theta \leqq 45°} \ldots \mathtt{(4)}$$

Specifically, the contact angle $\theta$ is set so as to be either of $\theta$=30°, 35°, 40°, or 45°.

Incidentally, the relationship of equation (4) is not limited particularly within this range.

According to the bearing apparatus for supporting the pinion shaft configured as described above, since a load of the rolling bearing 5 on the companion flange 7 side is smaller compared with a load of the rolling bearing 6 on the pinion gear 3 side, an angular contact ball bearing with small load carrying capacity is used for the rolling bearing 5 on the companion flange 7 side. Frictional resistance of the angular contact ball bearing is smaller compared with that of the tapered roller bearing, so that running torque thereof can be reduced, thereby improving fuel consumption of a vehicle.

In addition, as shown in said equations (2) and (3), the radius of curvature Ri of the inner ring raceway 55 and the radius of curvature Ro of the outer ring raceway 56 are both made smaller compared with typical values, so that a contact area between the ball 53 and the inner and outer ring raceways 55 and 56 is increased (holder surface is increased), so that contact pressure is reduced, thereby making it difficult to attach indentation to the raceway surface.

In addition, as shown in said equation (4), the contact angle $\theta$ is made larger compared with a typical value, so that a load carrying capacity to an axial load is increased. Furthermore, as the contact angle $\theta$ is increased, a shoulder diameter D of the inner ring 51 (Fig. 3) is also increased, so that a contact surface with the pressing section 72 of the companion flange 7 at the end face of the inner ring 51 can be sufficiently secured, thereby making it possible to certainly fix the inner ring 51 by the companion flange 7.

Moreover, since the angular contact ball bearing is employed as the rolling bearing 5, the number of balls can be increased compared with that of a deep groove ball bearing, so that a net rated load is increased, thereby enabling to ensure a sufficient bearing life.

Incidentally, instead of the nut 15, the side edge section of the drive shaft of the pinion shaft 4 may be fastened to fix the rolling bearings 5 and 6 to the pinion shaft 4.

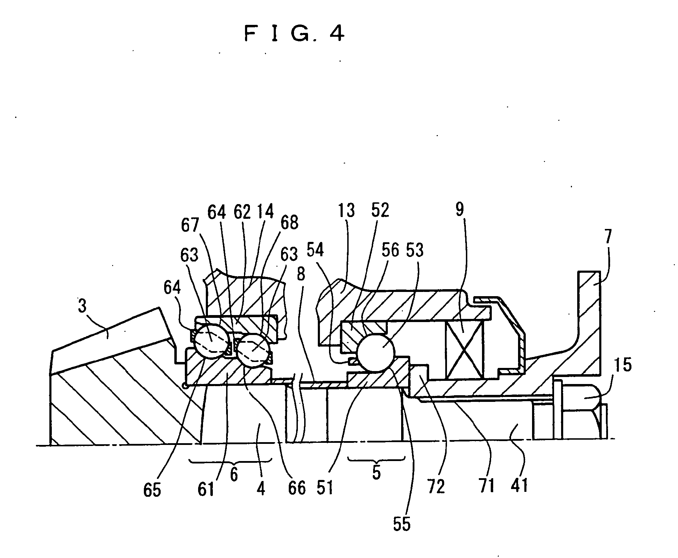

As shown in Fig. 4, the rolling bearing on the pinion gear side 6 may be a tandem type angular contact ball bearing with double raceway. The tandem type ball bearing means that diameters of circles which are formed by connecting centers of the balls 63 of each row (PCD) are different.

In other words, the rolling bearing 6 comprises the inner ring 61, the outer ring 62, and the set of balls 63 of two rows each held by the cage 64. A pair of inner ring raceways 65 and 66 and a pair of outer ring raceways 67 and 68 are formed in the inner ring 61 and the outer ring 62, respectively, and PCD of the set of balls 63 on the pinion gear side may become larger than that on a counter-pinion gear side.

Other configurations are similar to those of the example shown in Fig. 1 through Fig. 3.

The rolling bearing of the pinion gear side 6 is thus comprised of the tandem type angular contact ball bearing, so that torque reduction thereof can be further achieved compared with that of the tapered roller bearing. Moreover, the rolling bearing 6 is comprised of the tandem type angular contact ball bearing with double raceway, so that miniaturization of the bearing apparatus can be further achieved as compared with arranging the pair of angular contact ball bearings with single raceway side by side.

Incidentally, in the rolling bearing of the pinion gear side 6, supposing that a radius of curvature of the inner ring raceways 65 and 66 is Ri, a radius of curvature of the outer ring raceways 67 and 68 is Ro, and a diameter of the ball 63 is Bd, it may be configured so as to satisfy the relationship of said equations (1), (2), and (3). Moreover, the contact angle θ between each ball 63 and the inner and outer rings 61 and 62 may satisfy said equation (4).

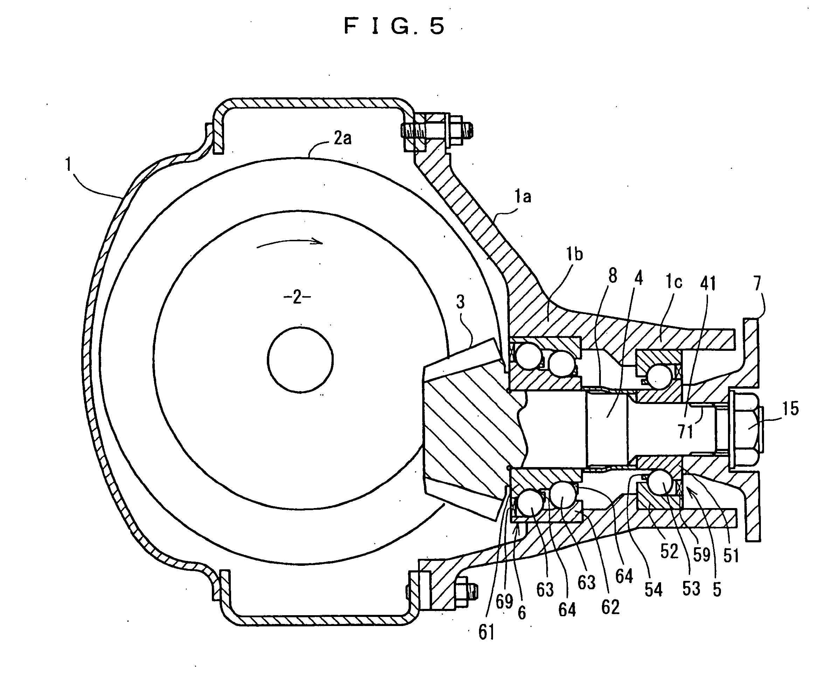

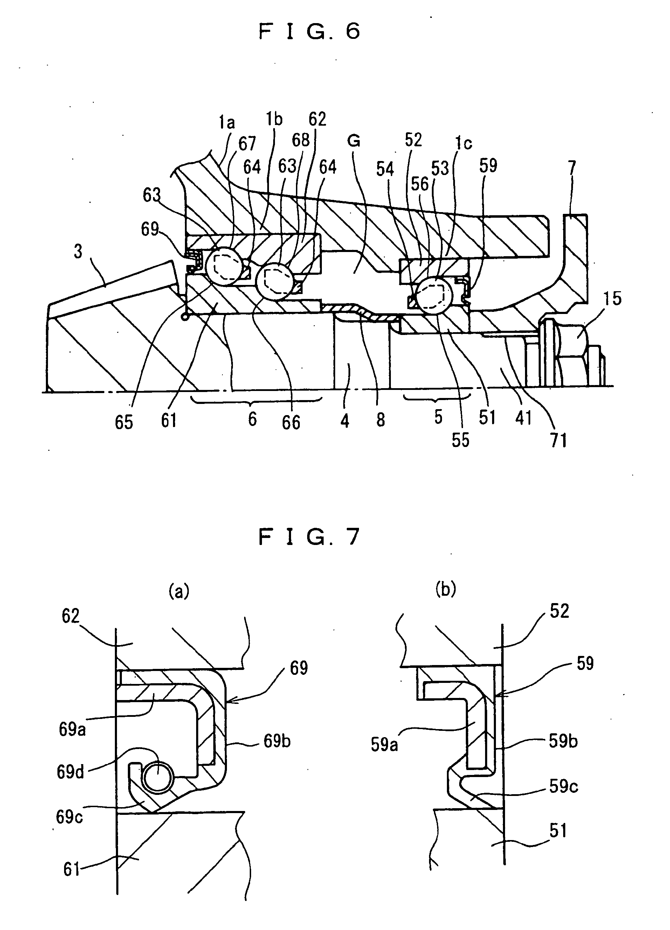

Fig. 5 is a cross-sectional view of a differential mechanism to which a bearing apparatus for supporting a pinion shaft is applied, Fig. 6 is a partially expanded cross-sectional view of the bearing apparatus for supporting the pinion shaft shown in Fig. 5, and Fig. 7 is an expanded sectional view of a seal portion of the bearing apparatus for supporting the pinion shaft shown in Fig. 5.

The bearing apparatus for supporting the pinion shaft of these figures shows that the rolling bearing 5 on the companion flange side comprises the angular contact ball bearing with single raceway, the rolling bearing 6 on the pinion gear side comprises the tandem type angular contact ball bearing with double raceway, and grease G is filled in a space between the rolling bearings 5 ands 6.

Incidentally, since the other configurations are similar to those of the example shown in Fig. 1-3, the same symbols are given the same components and description thereof will be omitted.

The rolling bearing 5 comprises the inner ring 51 having the inner ring raceway 55, the outer ring 52 having the outer ring raceway 56, and the set of balls 53 held in the cage 54, the rolling bearing 6 comprises the inner ring 61 having a pair of inner ring raceways 65 and 66, the outer ring 62 having a pair of outer ring raceways 67 and 68, and the set of balls 63 of two rows each held by the cage 64, and a side edge section of the companion flange of the rolling bearing 5 and a side edge section of the pinion gear of the rolling bearing 6 are sealed by seal members 59 and 69, respectively. The grease G is filled in the space between the rolling bearings 5 and 6 sealed by these seal members 59 and 69. The rolling bearing 5 satisfies the relationship between said equations (1) through (3) as shown in Fig. 3, and it may be configured so as to further satisfy said equation (4).

Incidentally, the rolling bearing 6 may also be configured so as to satisfy the relationship between said equations (1) through (3) and to further satisfy said equation (4) as described also in the example shown in Fig. 4.

The seal member 59 arranged on the companion flange side is formed by a type called a bearing seal, and the seal member 69 arranged on the pinion gear side is formed by a type called an oil seal.

The seal members 59 and 69 are formed by means of vulcanization-adhering of elastic bodies 59b and 69b, such as rubber, to annular core rings 59a and 69a, respectively, lip sections 59c and 69c which are contacted to the inner rings 51 and 61 in a state of having a predetermined tight binding force are formed in the elastic bodies 59b and 69b. Incidentally, the lip sections 59c and 69c have a shape being able to be opened towards the outside of the bearing so as to mainly prevent foreign substances from entering from the outside of the bearing.

In addition, the lip section 69c is compulsorily pressed to the inner ring 61 by a spring ring 69d, so that the seal member 69 improves the sealing performance as much as possible, thereby enabling to strongly prevent the oil from entering the inside of the bearing.

A spring ring or the like is not used for the seal member 59, and an inner diameter of the lip section 59c is only set to be smaller than an outer diameter of the shoulder portion of the inner ring 51 by a predetermined amount, so that the lip section 59c is made to contact to the inner ring 51 in a state where a diameter of the lip section 59c is resiliently expanded by means of this variation of tolerance. Incidentally, it may be configured such that an air hole for communicating the inside and the outside of the bearing is formed in the seal member 59, and the lip section 59c is prevented from sticking to the outer diameter of the shoulder portion of the inner ring 51 due to a pressure differential between the inside and the outside of the bearing.

An acrylic rubber, a heat-resistant acrylic rubber, or the like is preferably used for each of the elastic bodies 59b and 69b corresponding to the seal members 59 and 69, respectively. The heat-resistant acrylic rubber may be an ethylene acrylic rubber in which an ethylene and an acrylic ester are combined as a copolymer base composition.

In addition, a diurea type grease or an ester type grease having a desirable affinity with gear oil is preferably used for the grease G with which the inside of the bearing apparatus is filled, taking into consideration heat resistance. Specifically, a grease called, for example a tradename KNG170 made by Japan Grease Co. Ltd., or a tradename MULTEMP SRL made by Kyoudou Yusi Co. Ltd. , is suitably used. The KNG170 is provided by employing a poly α olefin mineral oil as base oil, and a diurea as thickening agent, and an operating temperature limit thereof is -30 through 150 degree C. The MULTEMP SRL is provided by employing an ester as base oil, and a lithium soap as thickening agent, and an operating temperature limit thereof is -40 through 130 degree C.

Also in the bearing apparatus for supporting the pinion shaft which is thus configured, running torque can be reduced, so that fuel consumption of a vehicle is improved.

Moreover, since the grease lubrication is employed instead of the oil lubrication, it is necessary to form neither an oil introduction path nor an oil return path in the differential case 1 like the oil lubrication, thereby making it possible to achieve a reduction in size and weight of the differential mechanism, and in addition to that, since the bearing apparatus is not influenced by foreign substances in the oil in the differential mechanism, it is possible to improve a bearing life.

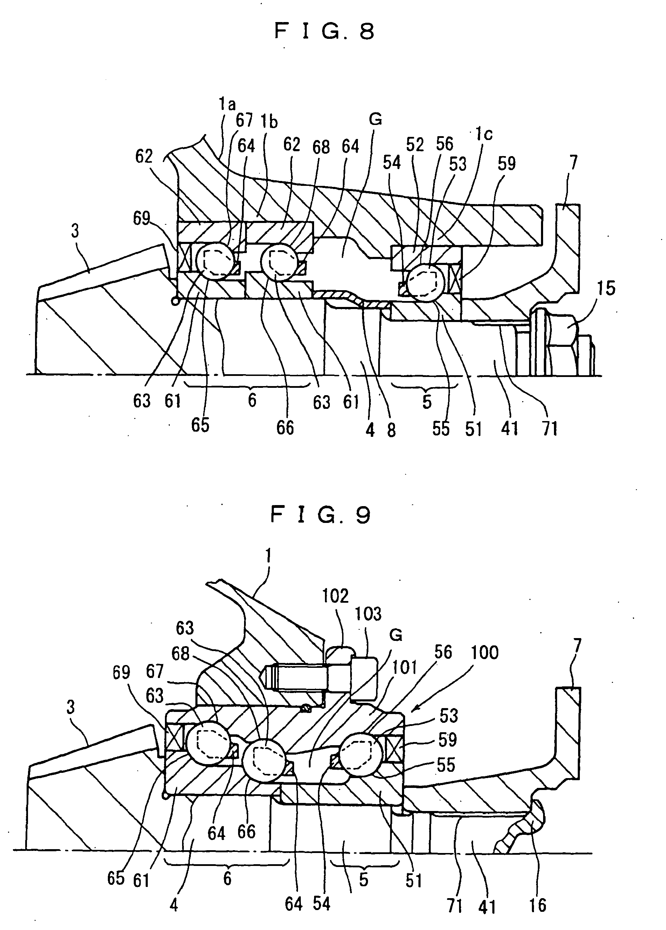

As shown in Fig. 8, the rolling bearing 6 on the pinion gear side may be a combination of two angular contact ball bearings with single raceway.

That is, the rolling bearing 6 comprises a pair of inner rings 61, a pair of outer rings 62, and the set of balls 63 of two rows each held by the cage 64 and are interposed between the each of the inner and outer rings 61 or 62.

Incidentally, the other configurations are similar to those of the example shown in Fig. 5 through Fig. 7.

Also in this example, the ball bearing of each row of the rolling bearing 6 may also be configured so as to satisfy the relationship between said equations (1) through (3), and to further satisfy said equation (4).

As shown in Fig. 9, the pinion shaft 4 may be rotatably supported to the differential retaining shield 1 by a bearing unit 100.

The bearing unit 100 comprises the rolling bearing 5 comprising the angular contact ball bearing with single raceway on the companion flange side, and the rolling bearing 6 comprising the tandem type angular contact ball bearing with double raceway on the pinion gear side. That is, the rolling bearing 5 comprises the inner ring 51, an outer ring 101, and the set of balls 53 held in the cage 54, and the rolling bearing 6 comprises the inner ring 61, the outer ring 101, and the set of balls 63 of two rows each held by the cage 64. The inner ring raceway 55 is formed in the inner ring 51, a pair of inner ring raceways 65 and 66 are formed in the inner ring 61, and three outer ring raceways 56, 67, and 68 are formed in the outer ring 101. The bearing unit 100 is formed into a unit such that both the inner rings 51 and 61 are matched in the shaft direction, the grease G is filled and both ends in the shaft direction are then sealed by the seal members 59 and 69, and the outer ring 101 is made into single.

Incidentally, the inner ring raceway 55, the outer ring raceway 56, and the set of balls 63 configuring the rolling bearing 5 may be configured so as to satisfy the relationship of said equations (1) through (3), and to further satisfy said equation (4) as shown in Fig. 3.

An accurate preload adjustment of the bearing unit 100 is performed in advance by attaching the inner rings 51 and 61, the outer ring 101, and the set of balls 53 and 63 held by the cages 54 and 64 into one unit during the manufacturing stage.

The rolling bearings 5 and 6 are then attached outside the periphery of the pinion shaft 4 to fit the bearing unit 100 thereto, and the pinion shaft 4 is inserted from a drive shaft side. The companion flange 7 is spline-fitted to the minor diameter section 41 on the drive shaft side of the pinion shaft 4, the side edge section of the drive shaft of the pinion shaft 4 is then radially fastened outwardly, and the companion flange 7 is tightly clamped in the direction of the pinion gear by means of a caulking 16 in question. The companion flange 7 is thus contacted to an end face of the inner ring 51 of the rolling bearing 5, and the inner ring 51 is pressed in the direction of the pinion gear. As a result, the inner rings 51 and 61 are inserted between the pinion gear 3 and the companion flange 7 to be fixed to the pinion shaft 4 in a state where a preload is given. Moreover, a flange 102 formed on a periphery of the outer ring 101 is fixed to the differential retaining shield 1 with a bolt 103.

Incidentally, the other configurations are similar to those of the example shown in Fig. 5 through Fig. 7.

Also in this example, the rolling bearing 6 may be configured so as to satisfy the relationship between said equations (1) through (3), and to further satisfy said equation (4).

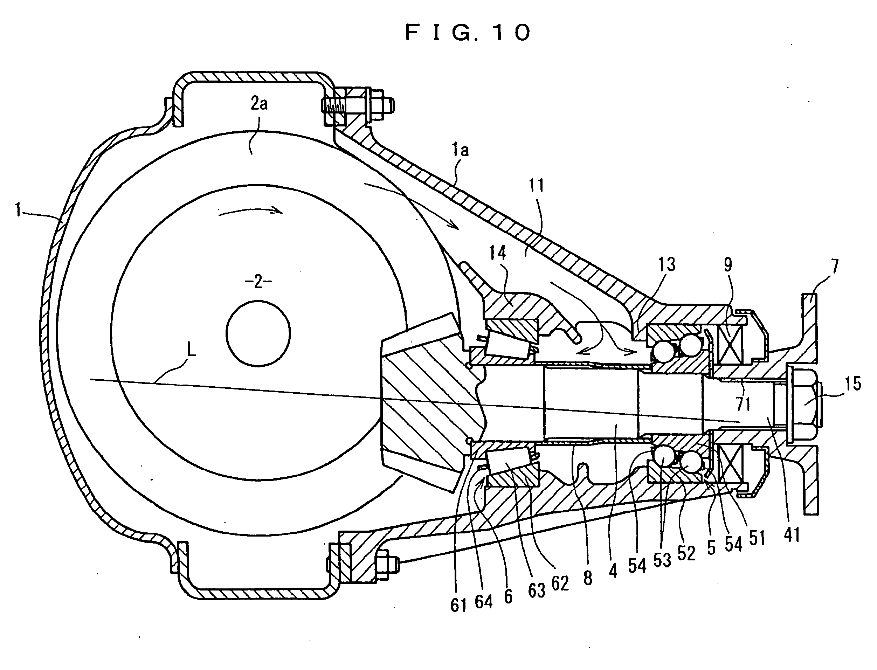

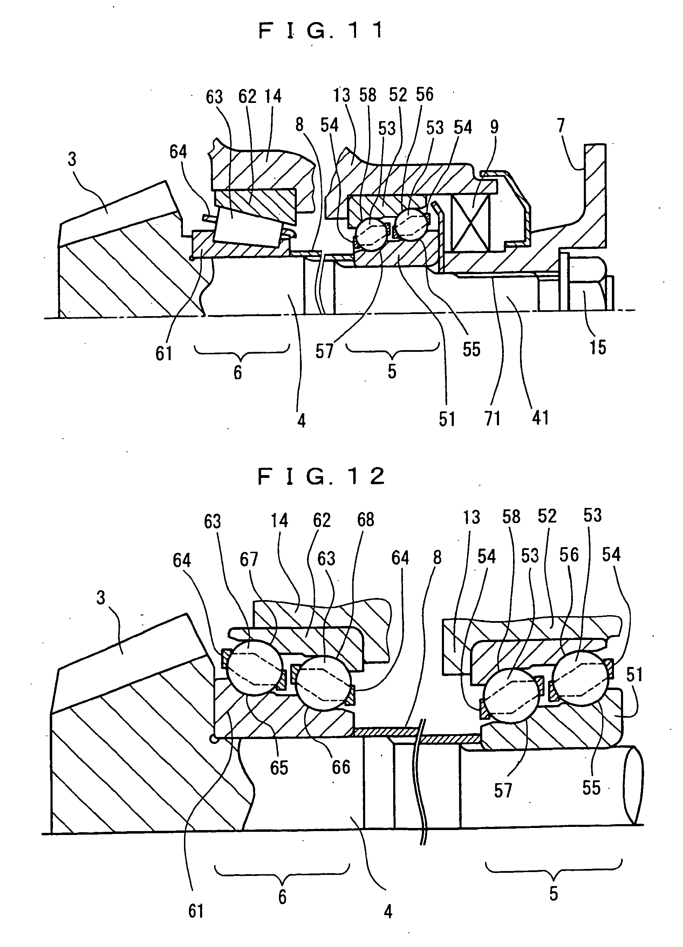

Description will be made of an of the present invention using Fig. 10 and Fig. 11.

Fig. 10 is a cross-sectional view of a differential mechanism to which a bearing apparatus for supporting a pinion shaft in the embodiment is applied, and Fig. 11 shows a partially expanded cross-sectional view of the bearing apparatus for supporting the pinion shaft shown in Fig. 10.

The bearing apparatus for supporting the pinion shaft of this embodiment is **characterized in that** the rolling bearing 5 on the companion flange side is comprised of the tandem type angular contact ball bearing with double raceway to be used as the angular ball bearing.

Incidentally, since the other configurations are similar to those of the example of Fig. 1-3, the same symbols are given the same components and description thereof will be omitted.

The rolling bearing 5 comprises the inner ring 51 having a pair of inner ring raceways 55 and 57, the outer ring 52 having a pair of outer ring raceways 56 and 58, and the set of balls 53 of two rows each held by the cage 54.

Supposing that a radius of curvature of each of the inner ring raceways 55 and 57, a radius of curvature of the outer ring raceways 56 and 58, and a diameter of the ball 53 configuring the rolling bearing 5 are Ri, Ro, and Bd, respectively, the relationship of said equations (1) through (3) is satisfied. Moreover, a contact angle θ between each ball 53 and the inner and outer rings 51 and 52 is set to satisfy said equation (4).

Also in the bearing apparatus for supporting the pinion shaft which is thus configured, running torque can be reduced, so that fuel consumption of a vehicle is improved. Moreover, the tandem type angular contact ball bearing with double raceway is used for the rolling bearing 5, so that bearing life, factor of safety to dead load, and rigidity thereof are further superior compared with those of the angular contact ball bearing with single raceway. Furthermore, as compared with arranging a pair of angular contact ball bearings with single raceway side by side, a stand out management becomes unnecessary and an assembly can be performed with ease.

As shown in Fig. 12, the rolling bearing of the pinion gear side 6 may be the tandem type angular contact ball bearing with double raceway.

That is, the rolling bearing 6 comprises the inner ring 61 having a pair of inner ring raceways 65 and 66, the outer ring 62 having a pair of outer ring raceways 67 and 68, and the set of balls 63 of two rows each held by the cage 64.

Incidentally, the other configurations are similar to those of the example shown in Fig. 10 and Fig. 11.

Also in this example, the rolling bearing 6 may also be configured so as to satisfy the relationship between said equations (1) through (3), and to further satisfy said equation (4).

According to the above bearing apparatus for supporting the pinion shaft, running torque can be reduced, so that an effect of improving fuel consumption of a vehicle can be achieved.

Industrial Availability

The present invention can be used for a bearing apparatus for supporting a pinion shaft for rotatably supporting a pinion shaft which configures a differential mechanism of a vehicle, a transfer mechanism for a four-wheel drive vehicle, or the like.

**Claims**

1.    A bearing apparatus for supporting a pinion shaft (4), comprising: a pair of rolling bearings (5.6) which rotatably support a pinion shaft (4) to a case and are arranged side by side in a shaft direction between a pinion gear (3) arranged at one end of said pinion shaft (4) and a companion flange (7) attached outside the other end thereof, wherein the rolling bearing (5) on the companion flange side comprises **a tandem type angular contact** ball bearing **with a double raceway** comprising an inner ring (51) fixed to said pinion shaft, an outer ring (52) fixed to said case, and a set of balls (53) interposed in two rows between these inner and outer rings, **characterised in that** a relationship between a radius of curvature Ri of **each** inner ring raceway (55,57), a radius of curvature Ro of **each** outer ring raceway (56,58), and a ball diameter Bd of the rolling bearing on the companion flange side satisfies

$$Ri < Ro,$$

and

$$0.502 \times Bd \leqq Ri \leqq 0.512 \times Bd,$$

and

$$0.510 \times Bd \leqq Ro \leqq 0.520 \times Bd,$$

wherein a contact angle θ between **each** ball and the inner and outer ring raceways (55,57;56,58) in the rolling bearing (5) on the companion flange side satisfies $30° \leqq \theta \leqq 45°$, wherein the rolling bearing (6) on the pinion gear side includes **a tapered roller bearing.**

**Patentansprüche**

1.    Lagervorrichtung zur Lagerung einer Ritzelwelle (4), umfassend:

ein Paar von Wälzlagern (5,6), die drehbar eine Ritzelwelle (4) in einem Gehäuse lagern und nebeneinander in einer Wellenrichtung zwischen einem Ritzel (3) an einem Ende der Ritzelwelle (4) und einem Anschlussflansch (7) angeordnet sind, der außerhalb des anderen Endes angebracht ist,

wobei das Wälzlager (5) auf der Seite des Anschlussflansches ein Schrägkugellager vom Tandemtyp mit einer doppelten Lauffläche umfasst, mit einem inneren Ring (51), der an der Ritzelwelle befestigt ist, einem äußeren Ring (52), der an dem Gehäuse befestigt ist, und einem Satz von Kugeln (53), die in zwei Reihen zwischen diesen inneren und äußeren Ringen angeordnet sind,

**dadurch gekennzeichnet, dass** eine Beziehung zwischen einem Krümmungsradius Ri jeder Innenring-Lauffläche (55,57), ein Krümmungsradius Ro von jeder Außenring-Lauffläche (56,58) und ein Kugeldurchmesser Bd des Wälzlagers an dem Montageflansch der folgenden Bedingungen genügt:

$$Ri < Ro,$$

und

$$0.502 \text{ x } Bd \leq Ri \leq 0.512 \text{ x } Bd,$$

und

$$0.510 \text{ x } Bd \leq Ro \leq 0.520 \text{ x } Bd,$$

wobei ein Kontaktwinkel θ zwischen jeder Kugel und den Innenring- und Außenring-Laufflächen (55,57,56,58) in dem Wälzlager (5) an der Seite des Montageflansches der Bedingung genügt: $30° \leq θ \leq 45°$,

wobei das Wälzlager (6) auf der Ritzelseite ein Kegelrollenlager umfasst.

## Revendications

1. Dispositif formant palier pour supporter un arbre de pignon (4), comprenant : deux paliers à roulement (5,6) qui supportent de manière rotative un arbre de pignon (4) sur un carter, et sont agencés côte à côte dans une direction d'arbre entre un engrenage à pignons (3) agencé à une extrémité dudit arbre de pignon (4) et une contre-bride (7) fixé à l'extérieur de son autre extrémité,

dans lequel le palier à roulement (5) du côté contre-bride comprend un roulement à billes à contact angulaire de type en tandem avec une double piste de roulement comprenant une bague annulaire (51) fixée sur ledit arbre de pignon, une bague externe (52) fixée sur ledit carter, et un ensemble de billes (53) intercalé sur deux rangées entre ces bagues interne et externe, **caractérisé en ce que** :

une relation entre un rayon de courbure Ri de chaque piste de roulement de bague interne (55, 57), un rayon de courbure Ro de chaque piste de roulement de bague externe (56, 58) et un diamètre de bille Bd'du palier à roulement côté contre-bride satisfait :

$$Ri < Ro,$$

et

$$0,502 \text{ x } Bd \leq Ri \leq 0,512 \text{ x } Bd,$$

et

$$0,510 \times Bd \leq Ro \leq 0,520 \times Bd,$$

un angle de contact θ entre' chaque bille et les pistes de roulement de bague interne et externe (55, 57 ; 56, 58) dans le palier à roulement (5) côté contre-bride satisfaisant $30° \leq \theta \leq 45°$,
le palier à roulement (6) côté engrenage à pignons comprenant un palier à roulement conique.

F I G. 1

FIG. 2

FIG. 3

EP 1 693 581 B1

F I G. 4

13

FIG. 5

# F I G. 6

# F I G. 7

(a)  (b)

# FIG. 8

# FIG. 9

FIG. 10

# F I G. 1 1

# F I G. 1 2

**EP 1 693 581 B1**

**REFERENCES CITED IN THE DESCRIPTION**

**Patent documents cited in the description**

- JP 2003232346 A
- US 5501530 A
- JP 9105450 A
- JP 10220468 A